# EUROPEAN PATENT SPECIFICATION

(11) **EP 2 402 288 B1**
(45) Date of publication and mention of the grant of the patent: **16.11.2016**
(21) Application number: 10168279.7
(22) Date of filing: 02.07.2010
(51) Int. Cl.: C02F 1/38, B01D 47/00, B01D 53/14, B01D 53/50, B01D 53/96, B04B 1/00, B04B 5/10, C02F 1/56, C02F 1/66, C02F 103/18

(54) **CLEANING EQUIPMENT FOR GAS SCRUBBER FLUID**
REINIGUNGSAUSRÜSTUNG FÜR GASWÄSCHERFLÜSSIGKEIT
ÉQUIPEMENT DE NETTOYAGE POUR LIQUIDE D'ÉPURATEUR DE GAZ

(43) Date of publication of application: 04.01.2012
(73) Proprietor: Alfa Laval Corporate AB, 221 00 Lund (SE)
(72) Inventor: Königsson, Staffan, 147 40 Tumba (SE); Sundquist, Lena, 112 64 Stockholm (SE)
(74) Representative: Alfa Laval Attorneys

(56) References cited:
- EP-A1- 2 364 760
- GB-A- 1 039 031
- JP-A- 2005 161 234

## Description

### BACKGROUND OF THE INVENTION AND PRIOR ART

The present invention relates to a cleaning equipment for gas scrubber fluid and to the use of a disc stack centrifugal separator in such a cleaning equipment.

The shipping industry of today strives to reduce harmful emissions, such as emissions originating from the combustion of fuel in the engine, in order to minimize the negative environmental impact and fulfill present and upcoming emission regulations, such as regulations set up by the International Maritime Organization (IMO).

One object in this is the reduction in sulphuric oxide (SOₓ) emissions from ships. Sulphuric oxides are created in the combustion of fuels containing sulphuric residues. The amount of sulphuric oxides in exhaust gas can be reduced by exhaust gas cleaning, e.g. by using scrubbers. The process of cleaning exhaust gas with the aid of the mentioned scrubbers produces polluted scrubber fluid.

Another object is the reductions in nitrogen oxides (NOₓ) emissions from marine engines. This can be done by implementing Exhaust Gas Recirculation (EGR), where part of the exhaust gas is recirculated to the combustion chamber of the engine. However, the amount of soot and particles in the exhaust gas needs to be decreased. It is therefore desirable to clean the exhaust gas, which can be done by using a scrubber. Also in this process polluted scrubber fluid is produced.

The polluted scrubber fluid comprises soot or other organic or inorganic combustion residues. The release of such polluted scrubber fluid directly into the sea is unacceptable from an environmental point of view and is strictly regulated. On the other hand it is expensive and undesirable to transport larger amounts of waste material to a harbour for disposal.

JP 3868352 B2 discloses equipment for wastewater treatment where polluted seawater from a scrubber is stored in a storage tank and then cleaned using a combination of a centrifugal separator and two oil filters before being recirculated to the scrubber.

JP 2005161234 A discloses a system for cleaning polluted scrubber water using a solid-particle concentration apparatus which comprises a plate type centrifugal separator.

During scrubbing of hot/warm exhaust gases by means of a wet scrubber, moisture in the exhaust gas may condensate into water, adding to the volume of scrubber fluid in the scrubber process. Further, various salts from the exhaust gas tend to be dissolved in the scrubber fluid in the scrubbing process. To reduce the risk of salt precipitates, the fluid may need to be diluted whereby the volume of scrubber fluid increases.

Fluid may thus be added to the scrubber fluid loop from the exhaust gas and/or due to deliberate addition of fluid to the system. To maintain the volume of scrubber fluid in the system, scrubber fluid has to be bled off from the scrubber process. One problem is then to improve the cleaning of the scrubber fluid in order to be able to release the scrubber fluid into the environment with a minimal environmental impact. Another problem is improve the cleaning of the scrubber fluid in order to be able to fulfill regulations on the amount of polyaromatic hydrocarbons, turbidity etc in the scrubber fluid to be released into the environment.

### THE INVENTION

Accordingly, the present invention reduces the above mentioned shortcomings by further improving environmental aspects of exhaust treatment procedures, improving the efficiency in exhaust treatment procedures, minimizing the amount of waste material that needs to be handled and disposed and further minimizing the need for service and diminishing problems with process equipment handling scrubber fluid.

Thus, the present invention relates to a cleaning equipment for polluted scrubber fluid from an exhaust gas scrubber fluid loop. The scrubber fluid loop may be a closed scrubber fluid loop, i.e. a circulation system providing recirculation of scrubber fluid through the scrubber and other components within the system. The scrubber fluid loop may include scrubbers used to clean the full flow of exhaust gas from an engine and/or scrubbers used to clean part of the flow of exhaust gas from an engine e.g. during EGR. The cleaning equipment comprises means for bleeding off part of the polluted scrubber fluid from the scrubber fluid loop, thereby removing said part of the polluted scrubber fluid from the scrubber fluid loop for disposal.

The cleaning equipment further comprises a disc stack centrifugal separator for separating at least a pollutant phase and a cleaned scrubber fluid from said part of the polluted scrubber fluid, which separator comprises a rotor enclosing a separation space with a stack of separating discs or a set of separating plates. The separating discs or plates may be frusto-conical or have any other suitable shape. The separator further comprises a separator inlet for said part of the polluted scrubber fluid extending into said separating space, a first separator outlet for cleaned scrubber fluid extending from said separating space, and a second separator outlet for the pollutant phase extending from said separating space. The separator may further be provided with a third separator outlet for another fluid phase which is denser or lighter than the scrubber fluid, such as oil.

The cleaning equipment may comprise two or more such disc stack centrifugal separators connected in parallel in order to provide an increased capacity allowing treatment of larger volumes of polluted scrubber fluid.

The cleaning equipment may further comprise means for conducting said part of the polluted scrubber fluid to the separator inlet, means for discharging the cleaned scrubber fluid from the first separator outlet, and means for collecting the pollutant phase from the second separator outlet. The means for conducting polluted and cleaned scrubber fluid and pollutant phase may comprise conduits, piping, tubing, tanks, pumps, valves and the like.

It has been found that, by using a disc stack centrifugal separator the separation of the pollutant phase from exhaust gas scrubber fluid is surprisingly efficient. The cleaned scrubber fluid resulting from the operation of such a separator is thus able to fulfill regulations and can thus be released into the environment with a minimal environmental impact. The separation in such a separator is gentle enough to maintain particles agglomerated and at the same time efficient by providing high separation forces and short separating distances. It has also been found that lighter liquid organic residues in the scrubber fluid, such as oil, tend to adhere to denser solid particles in the fluid in a way that makes it possible, in the disc stack separator, to separate the oil and the particles as a pollutant phase which is denser than the scrubber fluid. Thus the cleaning equipment does not have the same need for filters or other treatment steps and therefore improves the handling of the equipment by minimizing the need for service and replacement of key components. It has also been proven that by applying a disc stack centrifugal separator on the scrubber fluid, a large part of the pollutant phase can be removed in concentrated form. Therefore the volume of waste material can also be kept low.

The rotor of the separator may further enclose a conveyor screw which is arranged to be driven at a rotational speed differing from the rotational speed of the rotor so that to convey the pollutant phase, i.e. a separated phase with density higher than the cleaned scrubber fluid, towards the second separator outlet. The second separator outlet may be provided on a smaller radius than the outer radius of the separating space, and the conveyor screw arranged to convey the pollutant phase radially inwards and towards the second separator outlet. The conveyor screw may be arranged to be driven at a rotational speed differing from the rotational speed of the rotor at least during a discharge operation of the separator. The separator may be arranged to subject said part of the polluted scrubber fluid to a centrifugal force of at least 4000 G, preferably of at least 4500 G, more preferably of at least 5000 G during a fully developed operational speed, said centrifugal force being determined at an outer radius of the conveyor screw or at an outer radius of the separation space, in order to separate at least a pollutant phase and a cleaned scrubber fluid from said part of the polluted scrubber fluid. Due to this arrangement, the concentration particles in the pollutant phase can be very high, thus minimizing the amount of waste material being produced, while still maintaining a cleaned scrubber fluid that is able to fulfill regulations and that can be released into the environment with a minimal environmental impact. The separator may be controlled to obtain a pollutant phase, wherein the concentration of particles is 20-65 weight percent (corresponding to approximately 45-95 volume percent).

As an alternative to being provided with a conveyor screw the separator may be an intermittently discharging separator wherein the second separator outlet comprises one or more discharge ports that may be opened during operation to intermittently discharge polluted phase from the separating space, or a nozzle separator, wherein the second separator outlet comprises one or more discharge nozzles for continuous discharge of polluted phase from the separating space. The discharge ports or discharge nozzles may preferably extend from an outer radius of the separating space to the outside of the rotor for discharge of a separated phase with density higher than the cleaned scrubber fluid, i.e. the pollutant phase. According to these alternatives, the amount of pollutant phase, i.e. particles, in the discharge may be within the range of from about 5 to about 45 volume percent, preferably from about 20 to about 30 volume percent, depending on discharge frequency or nozzle size. The cleaning equipment may thus provide a large separation capacity from one such separator. According to a further alternative the cleaning equipment may comprise means for conducting the pollutant phase from such an intermittently discharging separator or a nozzle separator to the inlet of a further disc stack centrifugal separator, which further separator comprises a rotor enclosing a separation space with a stack of separating discs or a set of separating plates. The separators may thus be connected in series. The further separator may comprise a conveyor screw arranged to be driven at a rotational speed differing from the rotational speed of the rotor, as previously described. According to this further alternative, the cleaning equipment may provide a large separation capacity while still obtaining a pollutant phase wherein the concentration of particles is 20-65 weight percent (corresponding to approximately 45-95 volume percent) thus minimizing the amount of waste material being produced.

The separator inlet may be of a hermetic type. A hermetic inlet is sealed from the surroundings of the rotor and is arranged to be filled with scrubber fluid during operation. In a hermetic type of inlet the acceleration of the fluid is initiated at a small radius and gradually increased while the fluid leaves the inlet and enters the separation space. By using an inlet of a hermetic type, shear forces acting on the particle agglomerates in the scrubber fluid can be minimized, thereby improving the separation efficiency of the pollutant phase even further.

Said means for conducting said part of the polluted scrubber fluid to the separator inlet may comprise a flow regulating device. The means for conducting said part of the polluted scrubber fluid to the separator inlet may further comprise a buffer tank for said part of the polluted scrubber fluid, arranged so that the separator inlet for said part of the polluted scrubber fluid is connected to the buffer tank via the flow regulating device. The flow regulating device may comprise a pump or a valve, such as a proportional valve etc.

A cleaning equipment according to any one of the preceding claims further comprising means for adding a flocculant to said part of the polluted scrubber fluid upstream of the separator inlet. The flocculant facilitates agglomeration of particles in the polluted scrubber fluid and may be a polyelectrolyte.

The scrubber fluid may be water, but can also be other suitable liquids. Scrubber fluid as initially included in the process of cleaning exhaust gas, or as added to the process during operation, may preferably be tap water, fresh water or desalinated seawater. The scrubber fluid is in one aspect meant to be water having an amount of chlorides less than, or much less than sea water. Tap water can be provided from tanks or produced on board by desalination of seawater. The scrubber fluid may however contain salts included from the scrubber process.

The cleaning equipment may comprise means for controlling the quality of the cleaned scrubber fluid, and means for diverting and/or returning the cleaned scrubber fluid to the scrubber fluid loop, to the separator inlet or to a tank for polluted scrubber fluid if the quality is below a predetermined level. Thus the purity of the cleaned scrubber fluid can be further secured, minimizing the risk of potential negative environmental influence.

The cleaning equipment may comprise means for bleeding off parts of the polluted scrubber fluid from more than one scrubber fluid loop and means for conducting said parts of the polluted scrubber fluid to the separator inlet. Such scrubber fluid loops may include scrubbers used to clean the full flow of exhaust gas from an engine, and scrubbers used to clean part of the flow of exhaust gas from an engine e.g. during EGR. Such scrubber fluid loops may comprise further disc stack separators arranged to separating at least a pollutant phase and a cleaned scrubber fluid from said polluted scrubber fluid in the respective scrubber fluid loop. Non-limiting examples of such scrubber fluid loops are described in EP 10154682.8. The means for conducting said parts of the polluted scrubber fluid to the separator inlet may comprise flow regulating devices, so that to regulate the flow of the parts of the polluted scrubber fluid from each scrubber fluid loop to the separator inlet. Thereby the source or sources of polluted scrubber fluid may be controlled and regulated with respect to the capacity of the cleaning equipment.

The means for conducting said part of the polluted scrubber fluid to the separator inlet may be arranged to receive polluted phase from a further disc stack centrifugal separator, which is included in the scrubber fluid loop and arranged to separating at least a pollutant phase and a cleaned scrubber fluid from said polluted scrubber fluid in the scrubber fluid loop. Thus the cleaning equipment may be connected to a further disc stack centrifugal separator in a cleaning equipment as described in EP 10154682.8. The means for conducting said part of the polluted scrubber fluid to the separator inlet may be arranged to receive polluted phase from a further disc stack centrifugal separator via a second buffer tank and at least one flow regulating element, such as a pump, a valve and the like.

The cleaning equipment may comprise means for controlling and/or regulating the acidity of said part of the polluted scrubber fluid. The means for controlling and/or regulating the acidity may be arranged to keep the pH above 6, and may further be arranged to keep the pH below 8. The means for controlling and/or regulating the acidity may preferably be arranged to keep the pH within the range of 6-8. In one aspect, this may be done in order to compensate for acidic components, such as SOₓ, in the exhaust gas which may cause the scrubber fluid pH to decrease. The acidity may be controlled and/or regulated by measuring and adjusting the pH, by adding a pH regulating compound such as NoOH (sodium hydroxide), CaO (calcium oxide) or Ca(OH)₂ (calcium hydroxide). The acidity of said part of the polluted scrubber fluid may be controlled and/or regulated in order to facilitate the precipitation of a certain amount of dissolved salts and thus to maintain good separation process in the disc stack separator.

The present invention also provides an exhaust gas cleaning equipment for a diesel engine, such as a large engine on a ship, comprising a gas scrubber having an inlet for exhaust gas, a humidifying device for providing a scrubber fluid to the exhaust gas and a droplet separator for removing polluted scrubber fluid from the exhaust gas, a scrubber fluid loop for circulating the scrubber fluid to the scrubber, connected to a cleaning equipment according to the invention including means for bleeding off part of the polluted scrubber fluid from the scrubber fluid loop. The cleaning equipment according to the invention is also applicable to similar land based scrubber installations for cleaning gas, such as exhaust gas.

In another aspect of the present invention, a method for cleaning polluted scrubber fluid from a scrubber fluid loop is provided, comprising the steps of;
- bleeding off part of the polluted scrubber fluid from the scrubber fluid loop,
- separating, in a disc stack centrifugal separator, at least a pollutant phase and a cleaned scrubber fluid from said part of the polluted scrubber fluid,
- disposing the separated pollutant phase, and
- discharging the cleaned scrubber fluid.

The method may further comprise the steps of controlling the quality of the cleaned scrubber fluid before discharging, and diverting the cleaned scrubber fluid if the quality is below a certain level. The cleaned scrubber fluid can be discharged into the environment, i.e. the sea, or stored in a tank for different purposes. The method is preferably performed by means of a cleaning equipment as described above.

A further aspect of the present invention provides the use of a disc stack centrifugal separator to separate at least a pollutant phase and a cleaned scrubber fluid from polluted scrubber fluid being bled off from an exhaust gas scrubber fluid loop. The disc stack centrifugal separator may comprise a conveyor screw which is arranged to convey the pollutant phase towards a separator outlet for pollutant phase.

Further alternative embodiments of the present invention are defined in the claims. Various embodiments of the invention will now be explained in more detail with reference to the drawings. The drawings are for the purpose of illustrating the invention and are not intended to limit its scope.

### BRIEF DESCRIPTION OF THE DRAWINGS

- Figure 1: shows a cleaning equipment according to one embodiment of the invention.
- Figure 2: shows a cleaning equipment according to another embodiment of the invention.
- Figure 3: shows a cleaning equipment according to a further embodiment of the invention.
- Figure 4: shows a cleaning equipment according to yet a further embodiment of the invention.
- Figure 5: shows a cleaning equipment according to yet another embodiment of the invention.

### DETAILED DESCRIPTION OF EMBODIMENTS OF THE INVENTION

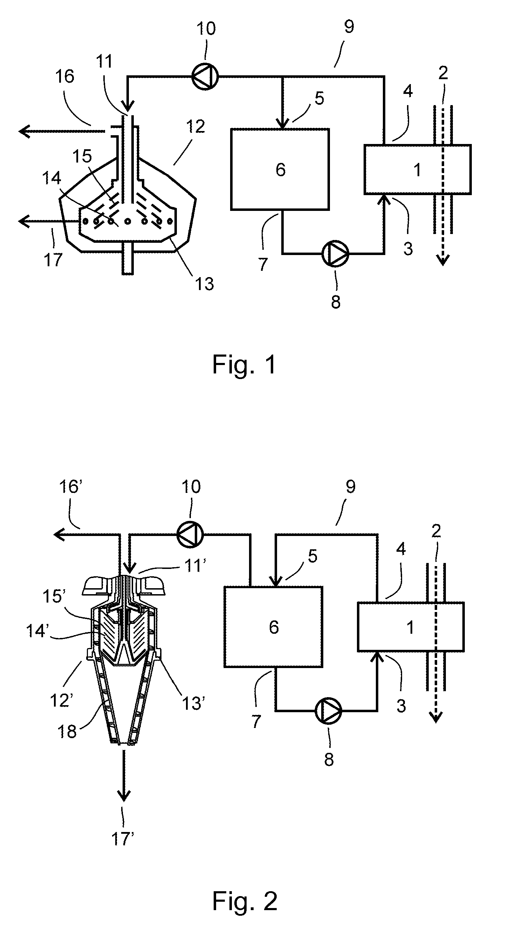

A cleaning equipment for gas scrubber fluid is shown in Fig. 1, connected to an exhaust gas scrubber 1. The exhaust gas scrubber 1 acts on an exhaust conduit 2 of a large diesel engine, such as the main or auxiliary engine of a ship. The scrubber is provided with a scrubber inlet 3 and a scrubber outlet 4 for scrubber fluid. The scrubber outlet 4 is connected to an inlet 5 of a buffer tank 6 for scrubber fluid. The buffer tank further comprises an outlet 7 for providing scrubber fluid to the inlet 3 of the scrubber, via a scrubber feed pump 8. The scrubber 1, the buffer tank 6 and the tubing connecting them form a scrubber fluid loop 9 in which scrubber fluid is being circulated during operation. The scrubber fluid loop may further be provided with means for the addition of clean scrubber fluid, such as tap water, fresh water or desalinated seawater to the process during operation (not shown). This may be done in any part of the scrubber fluid loop 9.

The cleaning equipment comprises tubing connected to the scrubber fluid loop 9 downstream of the scrubber outlet 4, for bleeding off part of the polluted scrubber fluid from the scrubber fluid loop. A separator feed pump 10 is connected to the tubing for pumping said part of the polluted scrubber fluid to the inlet 11 of a disc stack centrifugal separator 12. The feed pump may be replaced by other means for providing fluid flow to the separator inlet, such as by utilizing gravity or by means of overpressure in the buffer tank 6 or scrubber 1. The centrifugal separator 12 has a rotor 13 enclosing a separation space 14 which contains a stack of frustoconical separating discs 15 to which separation space the separator inlet 11 extends. The centrifugal separator 12 is further provided with a first separator outlet 16 for cleaned scrubber fluid, and a second outlet 17 extending from the separating space through the rotor in the form of discharge ports or nozzles for discharge of a separated phase with density higher than the cleaned scrubber fluid. The first separator outlet 16 for cleaned scrubber fluid may lead to the outside of the ship for discharge, or to a tank for temporary storage. The second separator outlet 17 may be connected to a storage tank for polluted phase.

During operation, scrubber fluid is provided from the buffer tank 6 to the scrubber inlet 3 via the scrubber feed pump 8. Scrubber fluid is atomised in the scrubber 1 and supplied to a flow of exhaust gas in or from the exhaust conduit 2. In the scrubber, the scrubber fluid is used in cleaning of organic and inorganic combustion residues from the exhaust gas. The resulting mixture of scrubber fluid and exhaust gas combustion residues is separated from the gas stream in the form of droplets and is led back to the buffer tank 6 from the scrubber outlet 4 and the inlet 5 for scrubber fluid of the cleaning equipment, thereby closing the scrubber fluid loop 9. Exhaust gas combustion residues contained in the scrubber fluid in the form of small particles are agglomerated into larger particles in the fluid, forming a pollutant phase. From the scrubber fluid loop 9, part of the polluted scrubber fluid is bled off and transported to the inlet 11 of the separator 12. The scrubber fluid containing the pollutant phase is introduced into the separating space 14 with the disc stack 15, contained in the rotor 13 of the centrifugal separator 12 rotating at a high speed. The pollutant phase has a mean density that is higher than the scrubber fluid. Under the influence of centrifugal forces and facilitated by the inclined surfaces of the separating discs, the pollutant phase is separated from the scrubber fluid and collected at a radially outer region of the separation space where from it is discharged via the second separator outlet 17. The second separator outlet 17 is in the form of discharge ports or nozzles and the particles are intermittently discharged from the centrifugal separator by opening the discharge ports at the periphery of the rotor 13 for a short period of time or continuously discharged via open nozzles at the periphery of the rotor. The discharged pollutant phase may be collected on the ship for later disposal. The concentration of pollutant particles in the discharge is within the range from about 5 to about 45 volume percent, typically from about 20 to about 30 volume percent, depending on the discharge frequency or nozzle size. The cleaned scrubber fluid is lead from the first separator outlet 16 to the outside of the ship for discharge, or to a tank for temporary storage.

In Fig. 2 another cleaning equipment for gas scrubber fluid is shown, connected to an exhaust gas scrubber 1. The cleaning equipment differs from what is shown in Fig. 1 in that the scrubber fluid loop is connected to a disc stack centrifugal separator 12' for cleaning part of the scrubber fluid in the scrubber fluid loop, bled off from the buffer tank 6. The centrifugal separator 12' has a rotor 13' enclosing a separation space 14' which contains a stack of frustoconical separating discs 15' to which separation space the separator inlet 11' extends. The centrifugal separator 12' is further provided with a first separator outlet 16' for cleaned scrubber fluid, and a second outlet 17' extending from the separating space for discharge of a separated phase with density higher than the cleaned scrubber fluid. The separator is further provided with a conveyor screw 18 which is enclosed in the rotor 13' and which is arranged to be driven at a rotational speed differing from the rotational speed of the rotor so that to convey the pollutant phase towards the second separator outlet 17'. The first separator outlet 16' for cleaned scrubber fluid may lead to the outside of the ship for discharge, or to a tank for temporary storage. The second separator outlet 17' may be connected to a storage tank for polluted phase.

During operation, part of the polluted scrubber fluid is bled off from the scrubber fluid loop 9, and transported to the inlet 11' of the separator 12'. The scrubber fluid containing the pollutant phase is introduced into the separating space 14' contained in the rotor 13' of the centrifugal separator 12' rotating at a high speed and further into the disc stack 15'. Typically, the disc stack is rotating at 7500 rpm, and the radius of the separating space is 93 mm, thus exerting a centrifugal force up to 5750 G during operation. The pollutant phase has a mean density that is higher than the scrubber fluid. Under the influence of centrifugal forces and facilitated by the inclined surfaces of the separating discs, the pollutant phase is separated from the scrubber fluid and collected at a radially outer region of the separation space 14' from which it is conveyed by means of the conveyor screw 18 which is driven at a rotational speed differing from the rotational speed of the rotor. The pollutant phase is conveyed to the second separator outlet 17', from which it is discharged. The discharged pollutant phase may be collected on the ship for later disposal. The concentration of the pollutant phase in the discharge is within the range of 20-65 weight percent. The cleaned scrubber fluid is lead from the first separator outlet 16' to the outside of the ship for discharge, or to a tank for temporary storage.

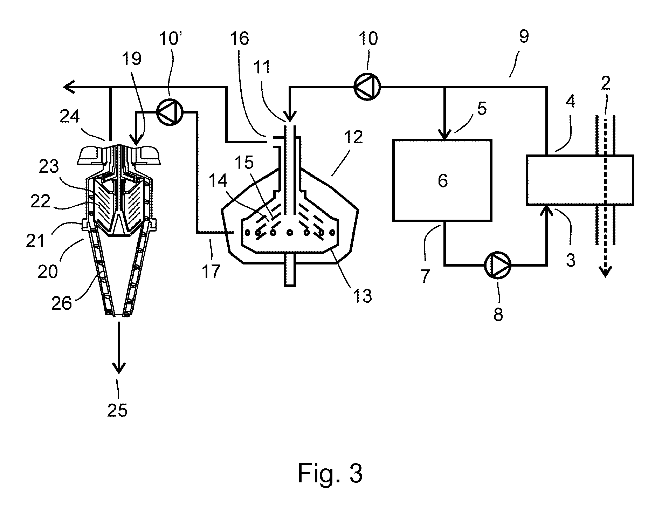

Fig. 3 shows a cleaning equipment for exhaust gas scrubber fluid, as previously described in Fig. 1, where the second separator outlet 17 is connected to the separator inlet 19 of a further disc stack centrifugal separator 20, via a second separator feed pump 10'. The second feed pump 10' may be replaced by other means for providing fluid flow to the separator inlet, such as by utilizing gravity, and may be connected to a buffer tank to be able to provide an even and controlled flow (not shown). The further centrifugal separator 20 has a rotor 21 enclosing a separation space 22 which contains a stack of frustoconical separating discs 23 to which separation space the separator inlet 19 extends. The further centrifugal separator 20 is provided with a first separator outlet 24 for cleaned scrubber fluid, which is connected to the first separator outlet 16 for cleaned scrubber fluid of the separator 12. The further centrifugal separator 20 is provided with a second outlet 25 extending from the separating space for discharge of a separated phase with density higher than the cleaned scrubber fluid. The separator 20 is provided with a conveyor screw 26 which is enclosed in the rotor 21 and which is arranged to be driven at a rotational speed differing from the rotational speed of the rotor so that to convey the pollutant phase towards the second separator outlet 25.

During operation, polluted phase discharged from the separator 12 via the second separator outlet 17, is introduced into the separating space 22 of the further centrifugal separator 20 via the inlet 19. In an operation similar to what is described in Fig. 2, the pollutant phase is further concentrated by removing even more of the cleaned scrubber fluid, thereby making the pollutant phase even dryer. The pollutant phase is collected at a radially outer region of the separation space 22 from which it is conveyed by means of the conveyor screw 26 to the second separator outlet 25. Discharged pollutant phase may be collected on the ship for later disposal. The concentration of the pollutant phase in the discharge is within the range of 20-65 weight percent. The cleaned scrubber fluid is discharged via the outlet 24 from which it is lead to the outside of the ship for discharge, or to a tank for temporary storage, separately or together with the cleaned scrubber fluid from the first separator 12.

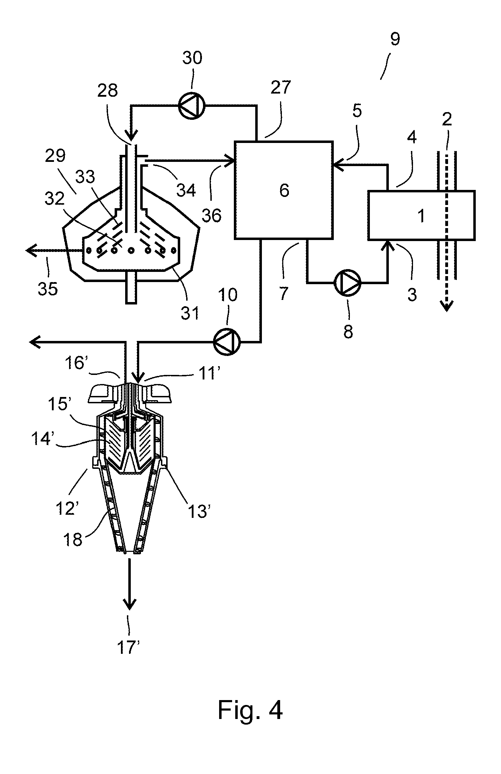

Fig 4 shows a cleaning equipment for exhaust gas scrubber fluid, similar to what is previously described in Fig. 2, where a disc stack centrifugal separator 12' is arranged for cleaning polluted scrubber fluid being bled off from a scrubber fluid loop 9, in this case from the buffer tank 6. The scrubber fluid loop includes a further centrifugal separator 29 comprising a disc stack. Starting from an outlet 27 the buffer tank 6 is provided with a cleaning loop for scrubber fluid connected to a separator inlet 28 of the further centrifugal separator 29 via a separator feed pump 30. The centrifugal separator 29 has a rotor 31 enclosing a separation space 32 which contains a stack of frustoconical separating discs 33 to which separation space the separator inlet 28 extends.

The centrifugal separator 29 is further provided with a first separator outlet 34 for cleaned scrubber fluid, and a second outlet 35 extending from the separating space through the rotor in the form of discharge ports or nozzles for discharge of a separated phase with density higher than the cleaned scrubber fluid. The first separator outlet 34 is connected to an inlet 36 on the buffer tank 6, closing the cleaning loop.

The operation of the cleaning equipment in Fig. 4 is similar to what is described in Fig. 2 with the addition of the cleaning loop. Scrubber fluid in the buffer tank 6 is, continuously or when needed, sent via the outlet 27 into the cleaning loop by means of the separator feed pump 30 to the separator inlet 28 of the centrifugal separator 29. The scrubber fluid containing the pollutant phase is introduced into the separating space 32 contained in the rotor 31 of the centrifugal separator 29 rotating at a high speed and further into the disc stack 33. The pollutant phase is separated from the scrubber fluid and collected at a radially outer region of the separation space from which it is discharged via the second separator outlet 35. The second separator outlet 35 is in the form of discharge ports or nozzles and the particles are intermittently discharged from the centrifugal separator by opening the discharge ports at the periphery of the rotor 31 for a short period of time or continuously discharged via open nozzles at the periphery of the rotor. The discharged pollutant phase may be collected on the ship for later disposal. The concentration of the pollutant phase in the discharge is within the range from about 5 to about 45 volume percent, typically from about 20 to about 30 volume percent, depending on the discharge frequency or nozzle size. The cleaned scrubber fluid is discharged from the first separator outlet 34 and sent back to the buffer tank 6.

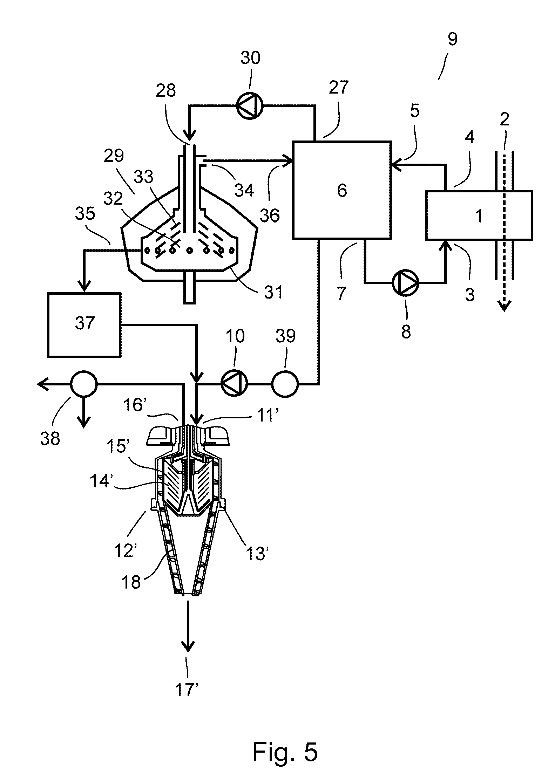

In Fig 5, the cleaning equipment as described in Fig. 4 is further modified by incorporating a discharge buffer tank 37 connected to the second separator outlet 35 in the cleaning loop. The buffer tank 37 is further connected to the inlet 11' of the disc stack centrifugal separator 12' via fluid regulating means. The fluid regulating means may comprise a feed pump or a valve in combination with gravity-driven flow. The operation of the cleaning equipment differs from what is described in Fig. 4 in that the discharged pollutant phase from the separator 29 in the cleaning loop is introduced and further concentrated in the separator 12'. The flow of polluted fluid from the buffer tanks 6 and 37 may be individually controlled to alter or blend the flows in a suitable manner.

The cleaning equipment shown in any of the figures may further comprise a quality control device 38 as illustrated in Fig 5. This quality control device 38 may be included in any one of Figs. 1-5 connected downstream of the first separator outlet 16 or 16'. The quality control device 38 is adapted to divert the flow of the cleaned scrubber fluid if the quality is lower than a certain required or predetermined quality level. The cleaned scrubber fluid may thus be diverted and/or returned to the scrubber fluid loop 9, such as to the buffer tank 6, to the separator inlet 11 or 11' or to a separate tank (not shown). The quality control device may be adapted control the turbidity, the pH and/or the concentration of particular chemical compounds such as polyaromatic hydrocarbons. Typically the quality control device control that the turbidity of the cleaned scrubber fluid is less than 25 FNU (formazin nephlometric units), or 25 NTU (nephlometric turbidity units), above the turbidity of the fluid being entered into the system, that the acidity is above pH 6.5 at the overboard discharge with the exception that during manoeuvring and transit, the maximum difference to the fluid being entered into the system being pH 2.

The cleaning equipment shown in any of the figures may further comprise a device 39 for the addition of a flocculant to the polluted scrubber fluid upstream of the separator inlet 11', as illustrated in Fig. 5. Such a device 39 may be included in any one of Figs. 1-5, and arranged upstream of any separator inlet 11, 11' or 19 and upstream or downstream of the optional feed pump 10 or 10'. The flocculant may be a polyelectrolyte and is added in order to facilitate agglomeration of particles in the polluted scrubber fluid when needed, to improve the separation efficiency and/or separation capacity.

## Claims

1. A cleaning equipment for polluted scrubber fluid from an exhaust gas scrubber fluid loop (9), comprising
means for bleeding off part of the polluted scrubber fluid from the scrubber fluid loop (9) and thereby removing said part of the polluted scrubber fluid from the scrubber fluid loop for disposal,
a disc stack centrifugal separator (12, 12') for separating at least a pollutant phase and a cleaned scrubber fluid from said part of the polluted scrubber fluid, which separator comprises a rotor (13, 13') enclosing a separation space (14, 14') with a stack of separating discs (15, 15'), a separator inlet (11, 11') for said part of the polluted scrubber fluid extending into said separating space, a first separator outlet (16, 16') for cleaned scrubber fluid extending from said separating space, and a second separator outlet (17, 17') for the pollutant phase extending from said separating space, which cleaning equipment further comprises means for conducting said part of the polluted scrubber fluid to the separator inlet, and
means for discharging the cleaned scrubber fluid from the first separator outlet, and
means for collecting the pollutant phase from the second separator outlet.

2. A cleaning equipment according to claim 1 wherein the rotor (13') of the separator further encloses a conveyor screw (18) which is arranged to be driven at a rotational speed differing from the rotational speed of the rotor so that to convey the pollutant phase towards the second separator outlet (17').

3. A cleaning equipment according to claim 2 wherein the separator is arranged to subject said part of the polluted scrubber fluid to a centrifugal force of at least 4000 G, preferably of at least 4500 G, more preferably of at least 5000 G during a fully developed operational speed in order to separate at least a pollutant phase and a cleaned scrubber fluid from said part of the polluted scrubber fluid.

4. A cleaning equipment according to claim 2 or 3, wherein the separator is controlled to obtain a pollutant phase, wherein the concentration of particles is 20-65 weight percent.

5. A cleaning equipment according to any one of the preceding claims, wherein the separator inlet (11, 11') is of a hermetic type.

6. A cleaning equipment according to any one of the preceding claims, wherein said means for conducting said part of the polluted scrubber fluid to the separator inlet comprises a flow regulating device.

7. A cleaning equipment according to any one of the preceding claims further comprising means (39) for adding a flocculant to said part of the polluted scrubber fluid upstream of the separator inlet (11, 11').

8. A cleaning equipment according to any one of the preceding claims, wherein the scrubber fluid is water, such as tap water, desalinated water, fresh water, etc.

9. A cleaning equipment according to any one of the preceding claims wherein the cleaning equipment comprises means (38) for controlling the quality of the cleaned scrubber fluid, and means for diverting and/or returning the cleaned scrubber fluid to the separator inlet (11, 11') or to a tank for polluted scrubber fluid if the quality is below a predetermined level.

10. A cleaning equipment according to any one of the preceding claims wherein the cleaning equipment comprises means for bleeding off parts of the polluted scrubber fluid from more than one scrubber fluid loop and means for conducting said parts of the polluted scrubber fluid to the separator inlet.

11. A cleaning equipment according to claim 10 wherein the means for conducting said parts of the polluted scrubber fluid to the separator inlet comprises flow regulating devices, so that to regulate the flow of the parts of the polluted scrubber fluid from each scrubber fluid loop to the separator inlet.

12. A cleaning equipment according to any one of the preceding claims wherein the means for conducting said part of the polluted scrubber fluid to the separator inlet is arranged to receive polluted phase from a further disc stack centrifugal separator (29), which is arranged to separate at least a pollutant phase and a cleaned scrubber fluid from said polluted scrubber fluid in the scrubber fluid loop.

13. A cleaning equipment according to claim 12, wherein the means for conducting said part of the polluted scrubber fluid to the separator inlet is arranged to receive polluted phase from a further disc stack centrifugal separator (29) via a second buffer tank (37) and a flow regulating device, preferably a pump or valve.

14. A cleaning equipment according to any one of the preceding claims further comprising means for controlling and/or regulating the acidity of said part of the polluted scrubber fluid arranged to keep the pH within the range of 6-8.

15. Use of a disc stack centrifugal separator in a cleaning equipment according to any one of the claims 1-14 to separate at least a pollutant phase and a cleaned scrubber fluid from polluted scrubber fluid being bled off from an exhaust gas scrubber fluid loop.

## Patentansprüche

1. Reinigungsausrüstung für verunreinigte Wäscherflüssigkeit aus einem Abgas-Wäscherflüssigkeitskreislauf (9), umfassend
Mittel zum Ableiten eines Teils der verunreinigten Wäscherflüssigkeit aus dem Wäscherflüssigkeitskreislauf (9) und dabei Entfernen des Teils der verunreinigten Wäscherflüssigkeit aus dem Wäscherflüssigkeitskreislauf zum Entsorgen,
einen Scheibenstapel-Zentrifugalabscheider (12, 12') zum Abscheiden wenigstens einer Verunreinigungsphase und einer gereinigten Wäscherflüssigkeit von dem Teil der verunreinigten Wäscherflüssigkeit, wobei der Abscheider einen Rotor (13, 13') umfasst, der einen Abscheidungsraum (14, 14') mit einem Stapel von Abscheidescheiben (15, 15') umschließt, einen Abscheidereinlass (11, 11') für den Teil der verunreinigten Wäscherflüssigkeit, der sich in den Abscheidungsraum erstreckt, einen ersten Abscheiderauslass (16, 16') für gereinigte Wäscherflüssigkeit, der sich von dem Abscheidungsraum aus erstreckt, und einen zweiten Abscheiderauslass (17, 17') für die Verunreinigungsphase, der sich von dem Abscheidungsraum aus erstreckt, wobei die Reinigungsausrüstung ferner Mittel zum Leiten des Teils der verunreinigten Wäscherflüssigkeit zu dem Abscheidereinlass,
Mittel zum Ablassen der gereinigten Wäscherflüssigkeit aus dem ersten Abscheiderauslass und
Mittel zum Auffangen der Verunreinigungsphase aus dem zweiten Abscheiderauslass umfasst.

2. Reinigungsausrüstung nach Anspruch 1, wobei der Rotor (13') des Abscheiders ferner eine Förderschnecke (18) umschließt, die dafür angeordnet ist, mit einer Drehzahl angetrieben zu werden, die sich von der Drehzahl des Rotors unterscheidet, um die Verunreinigungsphase in Richtung des zweiten Abscheiderauslasses (17') zu befördern.

3. Reinigungsausrüstung nach Anspruch 2, wobei der Abscheider dafür angeordnet ist, den Teil der verunreinigten Wäscherflüssigkeit während einer vollständig entwickelten Betriebsdrehzahl einer Zentrifugalkraft von wenigstens 4000 G, bevorzugt wenigstens 4500 G, bevorzugter wenigstens 5000 G auszusetzen, um wenigstens eine Verunreinigungsphase und eine gereinigte Wäscherflüssigkeit von dem Teil der verunreinigten Wäscherflüssigkeit abzuscheiden.

4. Reinigungsausrüstung nach Anspruch 2 oder 3, wobei der Abscheider dafür gesteuert ist, eine Verunreinigungsphase zu erhalten, wobei die Konzentration von Partikeln 20-65 Gewichtsprozent beträgt.

5. Reinigungsausrüstung nach einem der vorhergehenden Ansprüche, wobei der Abscheidereinlass (11, 11') von einer hermetischen Art ist.

6. Reinigungsausrüstung nach einem der vorhergehenden Ansprüche, wobei die Mittel zum Leiten des Teils der verunreinigten Wäscherflüssigkeit zu dem Abscheidereinlass eine Strömungsregeleinrichtung umfassen.

7. Reinigungsausrüstung nach einem der vorhergehenden Ansprüche, ferner umfassend Mittel (39) zum Hinzufügen eines Flockungsmittels zu dem Teil der verunreinigten Wäscherflüssigkeit stromaufwärts von dem Abscheidereinlass (11, 11').

8. Reinigungsausrüstung nach einem der vorhergehenden Ansprüche, wobei die Wäscherflüssigkeit Wasser, wie beispielsweise Leitungswasser, entsalztes Wasser, Süßwasser usw., ist.

9. Reinigungsausrüstung nach einem der vorhergehenden Ansprüche, wobei die Reinigungsausrüstung Mittel (38) zum Steuern der Qualität der gereinigten Wäscherflüssigkeit und Mittel zum Umleiten und/oder Zurückführen der gereinigten Wäscherflüssigkeit zu dem Abscheidereinlass (11, 11') oder zu einem Tank für verunreinigte Wäscherflüssigkeit umfasst, wenn die Qualität unter einem vorbestimmten Niveau liegt.

10. Reinigungsausrüstung nach einem der vorhergehenden Ansprüche, wobei die Reinigungsausrüstung Mittel zum Ableiten von Teilen der verunreinigten Wäscherflüssigkeit aus mehr als einem Wäscherflüssigkeitskreislauf und Mittel zum Leiten der Teile der verunreinigten Wäscherflüssigkeit zu dem Abscheidereinlass umfasst.

11. Reinigungsausrüstung nach Anspruch 10, wobei die Mittel zum Leiten der Teile der verunreinigten Wäscherflüssigkeit zu dem Abscheidereinlass Strömungsregeleinrichtungen umfassen, um die Strömung der Teile der verunreinigten Wäscherflüssigkeit von jedem Wäscherflüssigkeitskreislauf zu dem Abscheidereinlass zu regeln.

12. Reinigungsausrüstung nach einem der vorhergehenden Ansprüche, wobei die Mittel zum Leiten des Teils der verunreinigten Wäscherflüssigkeit zu dem Abscheidereinlass dafür angeordnet sind, Verunreinigungsphase von einem weiteren Scheibenstapel-Zentrifugalabscheider (29) aufzunehmen, der dafür angeordnet ist, wenigstens eine Verunreinigungsphase und eine gereinigte Wäscherflüssigkeit von der verunreinigten Wäscherflüssigkeit in dem Wäscherflüssigkeitskreislauf abzuscheiden.

13. Reinigungsausrüstung nach Anspruch 12, wobei die Mittel zum Leiten des Teils der verunreinigten Wäscherflüssigkeit zu dem Abscheidereinlass dafür angeordnet sind, Verunreinigungsphase von einem weiteren Scheibenstapel-Zentrifugalabscheider (29) über einen zweiten Puffertank (37) und eine Strömungsregeleinrichtung, bevorzugt eine Pumpe oder ein Ventil, aufzunehmen.

14. Reinigungsausrüstung nach einem der vorhergehenden Ansprüche, ferner umfassend Mittel zum Steuern und/oder Regeln des Säuregehalts des Teils der verunreinigten Wäscherflüssigkeit, die dafür angeordnet sind, den pH-Wert innerhalb des Bereichs von 6-8 zu halten.

15. Verwendung eines Scheibenstapel-Zentrifugalabscheiders in einer Reinigungsausrüstung nach einem der Ansprüche 1-14, um wenigstens eine Verunreinigungsphase und eine gereinigte Wäscherflüssigkeit von verunreinigter Wäscheiflüssigkeit abzuscheiden, die aus einem Abgas-Wäscherflüssigkeitskreislauf abgeleitet wird.

## Revendications

1. Équipement de nettoyage d'un fluide d'épurateur pollué issu d'une boucle de fluide d'épurateur (9) de gaz d'échappement, comprenant :
un moyen permettant de soutirer une partie du fluide d'épurateur pollué issu de la boucle de fluide d'épurateur (9) et ainsi de prélever ladite partie du fluide d'épurateur pollué de la boucle de fluide d'épurateur en vue de son élimination,
un séparateur centrifuge à empilement de disques (12, 12') destiné à la séparation d'au moins une phase de polluant et d'un fluide d'épurateur nettoyé à partir de ladite partie du fluide d'épurateur pollué, lequel séparateur comprend un rotor (13, 13') renfermant un espace de séparation (14, 14') comportant un empilement de disques de séparation (15, 15'), une entrée de séparateur (11, 11') destinée à ladite partie du fluide d'épurateur pollué et pénétrant dans ledit espace de séparation, une première sortie de séparateur (16, 16') destinée au fluide d'épurateur nettoyé et partant dudit espace de séparation, et une seconde sortie de séparateur (17, 17') destinée à la phase de polluant et partant dudit espace de séparation, ledit équipement de nettoyage comprenant en outre un moyen de guidage de ladite partie du fluide d'épurateur pollué vers l'entrée de séparateur,
un moyen permettant d'évacuer le fluide d'épurateur nettoyé hors de la première sortie de séparateur, et
un moyen permettant de recueillir la phase de polluant issue de la seconde sortie de séparateur.

2. Équipement de nettoyage selon la revendication 1, dans lequel le rotor (13') du séparateur renferme en outre une vis d'apport (18) conçue pour être entraînée à une vitesse de rotation différente de la vitesse de rotation du rotor de manière à apporter la phase de polluant vers la seconde sortie de séparateur (17').

3. Équipement de nettoyage selon la revendication 2, dans lequel le séparateur est conçu pour exposer ladite partie du fluide d'épurateur pollué à une force centrifuge d'au moins 4000 G, de préférence d'au moins 4500 G, et de manière encore plus préférable d'au moins 5000 G sous une vitesse de fonctionnement totalement développée afin de séparer au moins une phase de polluant et un fluide d'épurateur nettoyé à partir de ladite partie du fluide d'épurateur pollué.

4. Équipement de nettoyage selon la revendication 2 ou 3, dans lequel le séparateur est contrôlé pour obtenir une phase de polluant, la concentration en particules étant de 20 à 65 pour cent en poids.

5. Équipement de nettoyage selon l'une quelconque des revendications précédentes, dans lequel l'entrée de séparateur (11, 11') est de type hermétique.

6. Équipement de nettoyage selon l'une quelconque des revendications précédentes, dans lequel ledit moyen de guidage de ladite partie du fluide d'épurateur pollué vers l'entrée de séparateur comprend un dispositif de régulation du débit.

7. Équipement de nettoyage selon l'une quelconque des revendications précédentes, comprenant en outre un moyen (39) permettant d'ajouter un floculant à ladite partie du fluide d'épurateur pollué, en amont de l'entrée de séparateur (11, 11').

8. Équipement de nettoyage selon l'une quelconque des revendications précédentes, dans lequel le fluide d'épurateur est de l'eau, telle que de l'eau du robinet, de l'eau dessalée, de l'eau douce, etc.

9. Équipement de nettoyage selon l'une quelconque des revendications précédentes, dans lequel l'équipement de nettoyage comprend un moyen (38) permettant de contrôler la qualité du fluide d'épurateur nettoyé, et un moyen permettant de dévier et/ou de renvoyer le fluide d'épurateur nettoyé vers l'entrée de séparateur (11, 11') ou vers un réservoir destiné au fluide d'épurateur pollué si sa qualité est inférieure à un niveau prédéterminé.

10. Équipement de nettoyage selon l'une quelconque des revendications précédentes, dans lequel l'équipement de nettoyage comprend des moyens de soutirage de parties du fluide d'épurateur pollué issues de plus d'une boucle de fluide d'épurateur et des moyens de guidage desdites parties du fluide d'épurateur pollué vers l'entrée de séparateur.

11. Équipement de nettoyage selon la revendication 10, dans lequel les moyens de guidage desdites parties du fluide d'épurateur pollué vers l'entrée de séparateur comprennent des dispositifs de régulation du débit permettant de réguler le débit des parties du fluide d'épurateur pollué issues de chaque boucle de fluide d'épurateur vers l'entrée de séparateur.

12. Équipement de nettoyage selon l'une quelconque des revendications précédentes, dans lequel le moyen de guidage de ladite partie du fluide d'épurateur pollué vers l'entrée de séparateur est conçu pour recevoir une phase polluée issue d'un autre séparateur centrifuge à empilement de disques (29), lequel est conçu pour séparer au moins une phase de polluant et un fluide d'épurateur nettoyé à partir dudit fluide d'épurateur pollué dans la boucle de fluide d'épurateur.

13. Équipement de nettoyage selon la revendication 12, dans lequel le moyen de guidage de ladite partie du fluide d'épurateur pollué vers l'entrée de séparateur est conçu pour recevoir une phase polluée issue d'un autre séparateur centrifuge à empilement de disques (29) via un second réservoir tampon (37) et un dispositif de régulation du débit, de préférence une pompe ou une vanne.

14. Équipement de nettoyage selon l'une quelconque des revendications précédentes, comprenant en outre un moyen de contrôle et/ou de régulation de l'acidité de ladite partie du fluide d'épurateur pollué, conçu pour maintenir le pH dans la plage de 6 à 8.

15. Utilisation d'un séparateur centrifuge à empilement de disques dans un équipement de nettoyage selon l'une quelconque des revendications 1 à 14 pour séparer au moins une phase de polluant et un fluide d'épurateur nettoyé à partir du fluide d'épurateur pollué soutiré d'une boucle de fluide d'épurateur de gaz d'échappement.
